# EUROPÄISCHE PATENTSCHRIFT

(11) **EP 1 467 613 B1**
(45) Veröffentlichungstag und Bekanntmachung des Hinweises auf die Patenterteilung: **15.03.2006**
(21) Anmeldenummer: 03704236.3
(22) Anmeldetag: 21.01.2003
(51) Int. Cl.: A01K 27/00, A01K 1/02

(54) **LEINE**
LEAD
LAISSE

(30) Priorität: 21.01.2002 DE 20203731 U; 09.01.2003 DE 10300659
(43) Veröffentlichungstag der Anmeldung: 20.10.2004
(73) Patentinhaber: Fountoulakis, Tzanis, 32694 Dörentrup (DE)
(72) Erfinder: Fountoulakis, Tzanis, 32694 Dörentrup (DE)
(86) Internationale Anmeldenummer: PCT/DE2003/000159
(87) Internationale Veröffentlichungsnummer: WO 2003/059050

(56) Entgegenhaltungen:
- EP-A- 0 065 509
- CA-A- 2 303 609
- DE-U- 20 101 184
- US-A- 5 724 920

## Beschreibung

Die Erfindung betrifft eine Leine gemäß dem Oberbegriff des Hauptanspruchs.

Mit den bekannten kurzen oder langen Leinen können Tiere, insbesondere Hunde, mit mehr oder weniger Freiraum geführt werden. Solche bekannten Leinen weisen an ihren Enden üblicherweise Halteschlaufen auf, welche es ermöglichen, ein stark ziehendes Tier im Zaum zu halten, wobei solche Halteschlaufen für eine zugreifende Hand aber keinen festen Haltegriff zur Verfügung stellen, sodass eine dünne Leine möglicherweise nicht in jeder Lage sicher festgehalten werden und sich ein Tier mitsamt der Leine losreisen kann." Weiterhin können diese bekannten Leinen nicht, oder nicht ohne weiteres Zubehör zum sicheren Transport in Kraftfahrzeugen genutzt werden."

Aufgabe der Erfindung ist es eine wesentlich verbesserte Leine zur Verfügung zu stellen, die vor allen Dingen den sicheren Transport und die Fixierung des Hundes im Kfz. gewährleisten. Die Lösung dieser Aufgabe, wird in Verbindung mit den Oberbegriffsmerkmalen erfindungsgemäß durch die im kennzeichnenden Teil des Patentanspruchs 1 angegebene technische Lehre vermittelt.

Die erfinderische Leine besteht wie die bekannten Leinen aus einem Band oder Riemen, mit einem Handgriff und einem Karabinerhaken an einem unteren Ende, zum Anleinen eines Tieres an einem Halsband oder Geschirr und mit einer vorgefertigten und/oder durch Einklinken eines Karabinerhakens in Ösen der Leine verstellbaren Halteschlaufe an einem oberen Ende der Leine. An dieser Stelle wird der Stand der Technik aus DE 201 01 184 U 1 Meyer Ingo gewürdigt, der im wesentlichen eine bekannte Leine angemeldet hat, mit variabler Griffschlaufe und frei beweglichem Handgriff.

Anhand von Ausführungsformen stellt sich im folgenden die Abgrenzung und die erfinderische Tätigkeit da:
Im Handgriff ist ein Verschlussteil eines Kraftfahrzeugsicherheitsgurtes angeordnet, welcher an der Leine festgelegt ist und aus dem Handgriff hervorbewegt werden kann, wobei das Verschlussteil im Wesentlichen die Länge des Handgriffs aufweist und aus Metall gefertigt ist und so den starren Kern des Handgriffes bildet.

Der Handgriff besteht aus dem Verschlussteil und einer Umhüllung, die selber mit einem Verschluss versehen ist, an dem sie über ihre Länge zu öffnen und zu schließen ist, etwa einem Klettverschluss, sodass das Verschlussteil leicht zugänglich und auch ebenso leicht wieder zu verstauen ist. Mit dieser erfinderischen Leine ist also gewährleistet, dass ständig ein Sicherheitsgurt mitgeführt werden kann, ohne dass weitere erforderliche Bauteile im Kraftfahrzeug vorhanden sein oder mitgeführt werden müssen, die demzufolge auch nicht vergessen oder liegen gelassen werden können.

Vorteilhafterweise weist ein solches Verschlussteil einen Verriegelungsabschnitt und einen Befestigungsabschnitt auf, welcher eine Durchbrechung aufweist, durch die sich das Band oder der Riemen der Leine hindurch erstreckt, sodass er in der Position auf der Leine einstellbar ist oder in einer bestimmten Position, etwa durch Quernähte in einem doppelten Bereich der Leine festgelegt ist, sich aber in jede beliebige Winkelstellung zur Leine bewegen lässt.

Das Verschlussteil der erfindungsgemäßen Leine kann bevorzugt auch zweiteilig ausgebildet sein und aus einer Grundplatte mit einer Durchbrechung zur Befestigung der Grundplatte an der Leine und aus dem eigentlichen Verschlussteil bestehen, welches über ein Gelenk an der Grundplatte festgelegt und des Weiteren mit zwei unterschiedlichen Verriegelungsabschnitten für unterschiedliche Sicherheitsschlösser von Kraftfahrzeugen ausgestattet ist, sodass der Anwendungsbereich der Leine weiter erheblich vergrößert ist.

Bei einer besonders vorteilhaften Ausführungsform der Erfindung ist der Karabinerhaken in einem Abstand vom Verschlussteil angeordnet, der dem eines Sicherheitsgurtschlosses eines Kraftfahrzeuges und dem Halsband oder Geschirr eines auf einem Sitz oder einem dafür vorgesehenen Platz eines Kraftfahrzeuges sitzenden oder liegenden Tieres entspricht, sodass auch der Bewegungsspielraum eines Tieres in einem Kraftfahrzeug wesentlich reduziert werden kann, falls dies gewünscht ist. Dieser Abstand kann vorteilhafterweise auch über die Teillänge der Leine, welche durch ein Einklinken des Karabinerhakens in unterschiedliche Ösen der Leine erzeugt werden kann, einstellbar sein.

Die Leine kann des weiteren als Langleine oder auch als Kurzführer ausgebildet sein, wobei im letzten Fall die Halteschlaufe unmittelbar hinter dem Verschlussteil angeordnet ist, sodass eine Person ihre Hand durch die Halteschlaufe führen und anschließend den Handgriff umfassen kann, wodurch eine formstabile und ergonomische Haltevorrichtung zur Verfügung gestellt ist.

Nachfolgend sind zwei Ausführungsbeispiele der Erfindung anhand der Zeichnungen näher beschrieben. Es zeigen:
- Fig. 1: eine als Kurzführer ausgebildete Leine mit vorgefertigter Halteschlaufe,
- Fig. 2: eine Langleine mit variabler, verstellbarer Halteschlaufe,
- Fig. 3: die Leine gemäß Fig. 2 in ganzer Länge in verkleinerter Darstellung,
- Fig. 4: die Leine gemäß Fig. 3 mit aktivierter Sicherheitsgurtfunktion,
- Fig. 5: das griffseitige Ende der Leine gem. Fig. 1 mit geöffneter Umhüllung und
- Fig. 6: eine geöffnete Umhüllung eines Handgriffs mit einem Verschlussteil mit zwei unterschiedlichen Verriegelungsabschnitten.

Die Leine 1 besteht aus einem Band 12 oder Riemen, bevorzugterweise aus Leder oder einem Kunststoffgeflecht und weist am oberen Ende entweder eine vorgefertigte Halteschlaufe 2 oder eine durch ein Einklinken eines Karabinerhakens 21 in Ösen 15;16;17 der Leine 1 herstellbare Halteschlaufe 22 und am unteren Ende einen Karabinerhaken 11 auf sowie Verstellschnallen 13, über die die Länge der Leine 1 wunschgemäß angepasst werden kann.

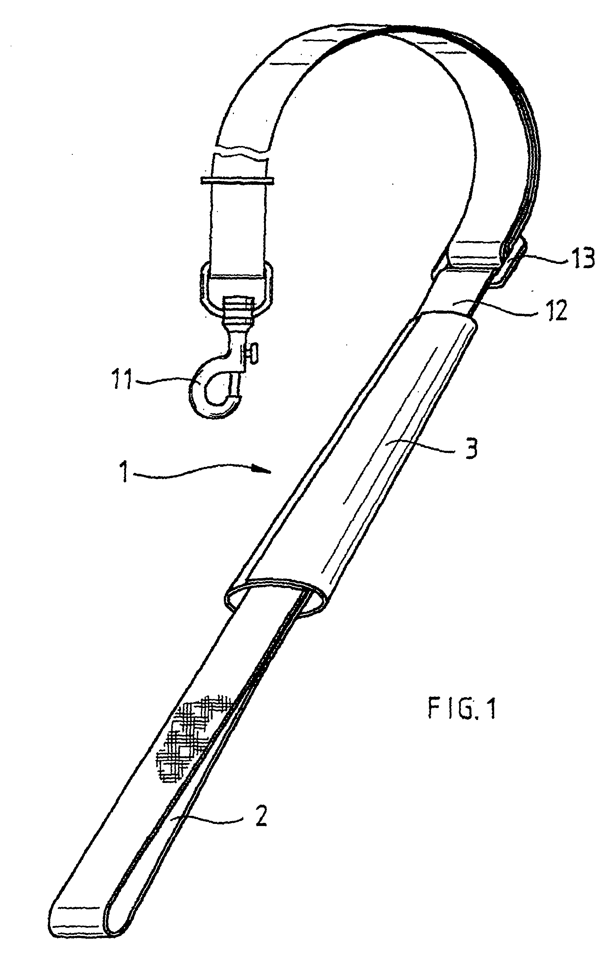

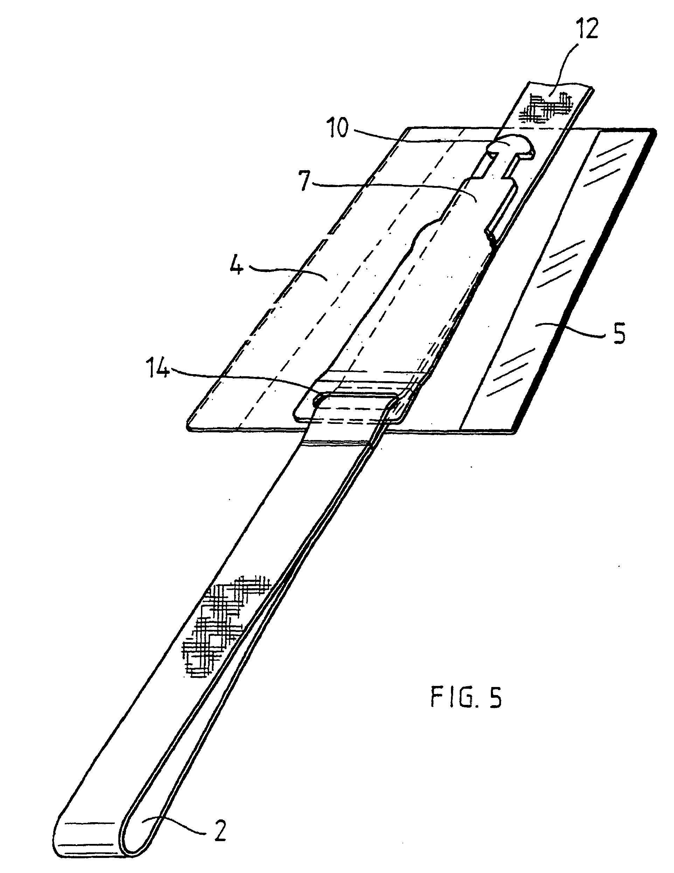

Die in den Fig. 1 und 5 dargestellte Ausführungsform der Leine 1 ist als Kurzführer ausgebildet und im Bereich unmittelbar hinter der Halteschlaufe 2 mit dem Handgriff 3 ausgebildet, welcher aus einer Umhüllung 4 besteht, in der ein Verschlussteil 7 angeordnet ist, welches eine Durchbrechung 14 aufweist, durch die sich das Band oder der Riemen der Leine 1 hindurch erstreckt und durch darin eingebrachte Quernähte festgelegt ist. An dem der Durchbrechung 14 entgegengesetzten Ende des Verschlussteils 7 ist ein Verriegelungsabschnitt 10 angeordnet, der in viele herkömmliche Gurtschlösser von Kraftfahrzeug-Sicherheitsgurtschlössern eingeführt werden kann.

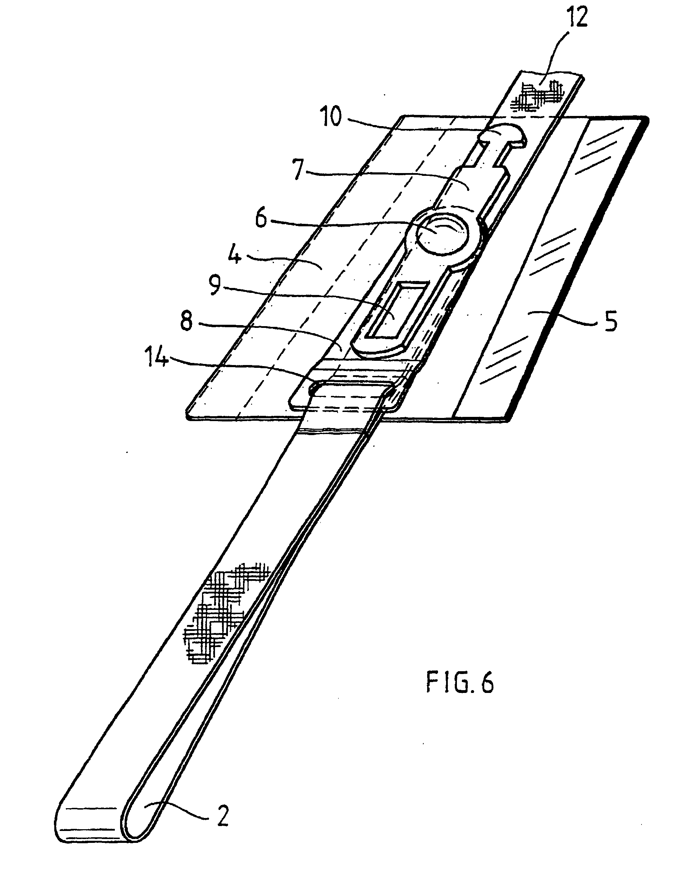

Ein Verschlussteil, wie es in Fig. 6 dargestellt ist, weist eine Grundplatte 8 mit einer Durchbrechung 14 auf sowie ein Gelenk 6, über das zwei Verriegelungsabschnitte 9;10 des Verschlussteils 7 wahlweise in eine Benutzungsposition verdreht werden können, sodass mit dieser Art Verschlussteil alle gängigen Schlösser von Sicherheitsgurten zum Angurten eines Tieres in einem Kraftfahrzeug genutzt werden können.

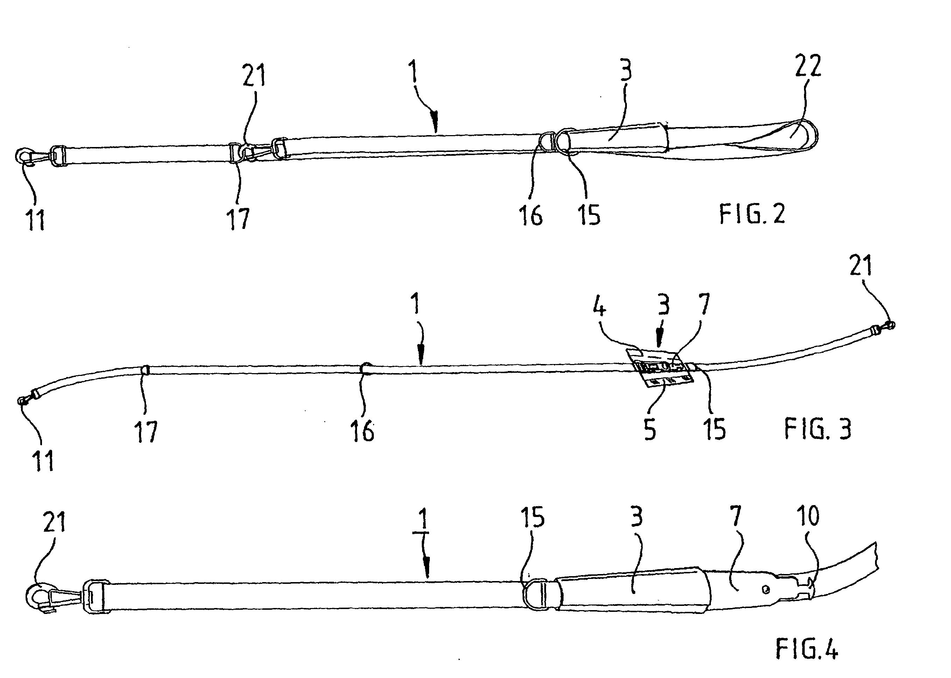

Wie in Fig. 3 dargestellt, kann eine Leine 1 auch als Langleine ausgebildet sein und mit einem zweiten Karabinerhaken 21 sowie über die Lange der Leine 1 mit verschiedenen Ösen 15;16;17 versehen sein, wobei eine Öse 15 beispielsweise vor dem Handgriff 3, eine Öse beabstandet hinter dem Handgriff 3 und eine Öse 17 im Endbereich der Leine 1 angeordnet sein kann, sodass sich beim Einklinken des Karabinerhakens 21 in die erste Öse 15 eine der Fig. 1 ähnliche Form einer vorgefertigten Halteschlaufe ergibt und beispielsweise beim Einhaken des Karabinerhakens 21 in die letzte Öse 17 der Leine 1 eine Darstellung einer stark verkürzten Leine 1 mit einer Holteschlaufe 22, die ebenfalls von einer Hand durchgriffen werden kann, bevor der Handgriff 3 ergriffen wird, sodass von dem Benutzer wahlfrei die ihm bequemste oder am sinnvoll erscheinenste Benutzung möglich ist.

Die Hülle 4 des Handgriffes 3 weist vorzugsweise einen Klettverschluss 5 auf, sodass sie leicht um das den starren Kern des Handgriffes 3 umhüllende Verschlussteil 7 bzw. das mit der Grundplatte 8 verbundene Verschlussteil 7 herum befestigt werden kann.

## Patentansprüche

1. Leine (1) mit einem Handgriff (3), aus einem Band oder Riemen, mit einem Karabinerhaken (11) an einem unteren Ende, zum Anleinen eines Tieres an einem Halsband oder Geschirr und mit einer vorgefertigten und/oder durch Einklinken eines Karabinerhakens in Ösen der Leine verstellbaren Halteschlaufe (2) an einem oberen Ende,
**dadurch gekennzeichnet,**
**dass** im Handgriff (3) ein Verschlussteil (7) eines Kfz-Sicherheitsgurtes angeordnet ist, welches an der Leine (1) festgelegt ist und dass das Verschlussteil (7) von einer Umhüllung (4) umgeben ist, die mit einem Verschluss (5) versehen ist, an dem sie der Länge nach zu öffnen und zu schließen ist und dass das Verschlussteil (7) und die Umhüllung (4) den Handgriff (3) bilden.

2. Leine nach Anspruch 1,
**dadurch gekennzeichnet,**
**dass** das Verschlussteil (7) einen Verriegelungsabschnitt (9;10) und einen Befestigungsabschnitt aufweist, welcher als Durchbrechung (14) ausgebildet ist, durch die sich das Band oder der Riemen der Leine (1) hindurch erstreckt.

3. Leine nach Anspruch 1 bis 2,
**dadurch gekennzeichnet,**
**dass** das Verschlussteil (7) zweiteilig ausgebildet ist und aus einer Grundplatte (8) mit einer Durchbrechung (14) und aus dem Verschlussteil (7) besteht, welches über ein Gelenk (6) an der Grundplatte (8) festgelegt ist und zwei unterschiedliche Verriegelungsabschnitte (9;10) für unterschiedliche Sicherheitsgurtschlösser von Kraftfahrzeugen aufweist.

4. Leine nach Anspruch 1 bis 3,
**dadurch gekennzeichnet,**
**dass** der Karabinerhaken (11,21) in einem Abstand vom Verschlussteil (7) angeordnet ist, der dem eines Sicherheitsgurtschlosses eines Kraftfahrzeuges und dem Halsband oder Geschirr eines auf einem Sitz oder einem dafür vorgesehenen Platz des Kraftfahrzeuges sitzenden oder liegenden Tieres entspricht.

5. Leine nach einem der vorgenannten Ansprüche,
**dadurch gekennzeichnet,**
**dass** der Abstand über die Teillänge der Leine (1) einstellbar ist.

6. Leine nach einem der vorgenannten Ansprüche,
**dadurch gekennzeichnet,**
**dass** sie als Kurzführer ausgebildet und die Halteschlaufe (2) unmittelbar hinter dem Verschlussteil (7) angeordnet ist und für eine durch die Halteschlaufe (2) geführte Hand einer Person und von deren Hand umfassenden Handgriff (3) aus Verschlussteil (7) und Umhüllung (4) eine formstabile ergonomische Haltevorrichtung gebildet ist.

## Revendications

1. Laisse (1) avec une poignée (3) consistant en une bande ou une lanière, avec, à une extrémité inférieure, un mousqueton (11) pour mettre en laisse un animal par un collier ou un harnais, et avec, à une extrémité supérieure, une boucle de retenue préfabriquée et / ou réglable par encliquetage d'un mousqueton dans des anneaux de la laisse,
**caractérisée en ce que**,
dans la poignée (3), est agencé un élément de fermeture (7) d'une ceinture de sécurité pour véhicule automobile, qui est fixé à la laisse (1), et que l'élément de fermeture (7) est revêtu d'une gaine (4) qui est pourvue d'une fermeture (5) sur laquelle il peut être ouvert et fermé dans le sens de la longueur, et **en ce que** l'élément de fermeture (7) et la gaine (4) forment la poignée (3).

2. Laisse selon revendication 1,
**caractérisée en ce que**
l'élément de fermeture (7) présente une section de verrouillage (9, 10) et une section de fixation qui est conçue sous la forme d'un passage (14) à travers lequel s'étend la bande ou la lanière de la laisse (1) .

3. Laisse selon revendication 1 à 2,
**caractérisée en ce que**
l'élément de fermeture (7) est formé de deux parties et comprend une plaque de base (8) avec un jour (14) et l'élément de fermeture (7) qui est fixé dans la plaque de base (8) par l'intermédiaire d'une articulation (6), et présente deux zones de verrouillage différentes (9, 10) pour différents verrous de ceintures de sécurité pour véhicules automobiles.

4. Laisse selon revendication 1 à 3,
**caractérisée en ce que**
le mousqueton (11 ; 21) est disposé à un intervalle de l'élément de fermeture (7) qui correspond à l'intervalle entre un verrou de ceinture de sécurité d'un véhicule automobile et le collier ou le harnais d'un animal assis ou couché sur un siège ou à un endroit prévu dans ce but dans un véhicule automobile.

5. Laisse selon l'une des revendications précédentes,
**caractérisée en ce que**
l'intervalle peut être réglé sur la longueur partielle de la laisse (1).

6. Laisse selon l'une des revendications précédentes,
**caractérisée en ce que**
celle-ci est conçue en tant que guide de faible longueur et que la boucle de maintien (2) est disposée directement derrière l'élément de fermeture (7) et que, pour la main d'une personne passant dans la boucle de maintien (2) un dispositif de maintien ergonomique et indéformable est formé par la poignée (3) entourant la main, constituée da l'élément de fermeture (7) et de la gaine (4) .

## Claims

1. Lead (1) with a handle (3) made of a strap or belt, with a spring hook (11) at the lower end, for leashing an animal to a collar or harness and with a ready-made strap (2) and/or an adjustable strap made by engaging a spring hook into the eyes of the lead at the upper end, **characterized by** the fact that a closure part (7) from an automobile seat belt is provided in the handle (3), which is attached to the lead (1) with the closure part (7) surrounded by a covering (4), which is provided with a clasp (5), at which it can be opened or closed lengthwise, and by the fact that the closure part (7) and the covering (4) form the handle (3).

2. Lead according to Claim 1,
**characterized by** the fact that the closure part (7) has an interlock section (9, 10) and a fastening section, which is constructed as a through hole (14), through which the strap or belt of the lead (1) extends.

3. Lead according to Claims 1 and 2,
**characterized by** the fact that
the closure part (7) is constructed in two parts and comprised of a base plate (8) with a through hole (14) and of the closure part (7), which is attached by means of a hinge (6) on the base plate (8) and has two different interlock sections (9, 10) for different seat belt locks on automobiles.

4. Lead according to claims 1 through 3,
**characterized by** the fact that
the spring hook (11; 21) is arranged at an interval from the closure part (7) which corresponds to that of an automobile seat belt and the collar or harness of an animal sitting or lying on a seat or place within the automobile provided for this purpose.

5. Lead according to one of the above-mentioned claims,
**characterized by** the fact that the interval is adjustable along the partial length of the lead (1).

6. Lead according to one of the above-mentioned claims,
**characterized by** the fact that
it is designed as a short lead with the arm strap (2) located directly behind the closure part (7) and forms a dimensionally stable, ergonomic holding device for the hand of a person which has been guided through the arm strap (2) and the handle (3) being clasped by this hand comprised of the closure part (7) and covering (4).
